(19) Europäisches Patentamt European Patent Office Office européen des brevets

(11) **EP 1 920 689 A1**

(12) **EUROPEAN PATENT APPLICATION**

(43) Date of publication:
**14.05.2008 Bulletin 2008/20**

(51) Int Cl.:
***A47J 37/06*** *(2006.01)*

(21) Application number: **07118129.1**

(22) Date of filing: **09.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **07.11.2006 US 594330**

(71) Applicant: **Whirlpool Corporation Benton Harbor, MI 49022 (US)**

(72) Inventors:
• **Genslak, Kristina J. Whirlpool Europe s.r.l. 21025 Comerio (IT)**

• **Ciancimino, Rosario Whirlpool Europe s.r.l. 21025 Comerio (IT)**
• **Ledingham, John B. Whirlpool Europe s.r.l. 21025 Comerio (IT)**

(74) Representative: **Guerci, Alessandro Whirlpool Europe S.r.l. Patent Department Viale G. Borghi 27 21025 Comerio (VA) (IT)**

(54) **Removable mold for a grill**

(57)    A mold for a grill, such as a waffle maker, for cooking a food item has a body configured to be received by the grill, a form provided on the body and defining at least a portion of a recess in which the food item is received for cooking and defining the shape of the food item.

Fig. 2A

EP 1 920 689 A1

**(Cont. next page)**

Fig. 2B

**Description**

**BACKGROUND OF THE INVENTION**

**Field of the Invention**

This invention relates generally to accessories for a grill, and more specifically to a mold for a grill, such as a waffle maker, that allows differently-shaped food items to be made.

**Description of the Related Art**

Cooking grills are commonly used by consumers to cook a variety of food items. A common type of grill is the clamshell-type grill that has opposing grill plates that are hingedly connected together and the food item is sandwiched between the grill plates to simultaneously cook both sides of the food item.

A waffle maker is an example of the clamshell-type grill. Waffle makers, also referred to as waffle irons or waffle bakers, generally have two metallic grill plates, including a stationary bottom plate and a pivoting top plate that can be selectively closed over to the bottom plate. The grill plates are normally made of heavy iron or steel. To make a waffle, batter is poured onto the bottom plate and the top plate is closed. The shape of the waffle is determined by the shape of the plates, which are usually a circular or rectangular shape.

Some attempts have been made to produce waffles of other shapes. Waffle makers having interchangeable grill plates of different shapes are available. However, to change the waffle shape between batches, a user must remove the hot grill plates and replace them with the other grill plates which must then be heated. Handling hot grill plates can be unsafe and waiting for replacement grill plates to heat is time-consuming for the user.

To permit changing the shape of the waffle while avoid swapping the grill plates, a metallic mold has been used. The mold has different shapes and is removably received between the grill plates. However, these molds are made from the same heavy iron or steel as the grill plates. Thus, they must be preheated after being inserted between the grill plates for the waffle to cook properly, which slows the cooking time. They also become very hot and must be carefully handled when being removed from the waffle maker. In addition, the repeated insertion and removal of metallic molds can damage a surface coating on the grill plates.

Therefore, a device for changing the shapes of food items cooked on a grill such as a waffle maker is needed that is safe and convenient for the user to operate.

**SUMMARY OF THE INVENTION**

A mold according to the invention is provided for a grill having opposing grill plates movable between opened and closed positions between which a food item is received for cooling when the grill plates are in the closed position. The mold has a body configured to be received between the grill pates in the closed position. A form is provided on the body and defines at least a portion of a recess in which the food item is received for cooking and defines the shape of the food item. The body has properties that allows a user to remove the mold by hand from the grill plates or insert the body between grill plates that are heated above a threshold temperature suitable for grilling without causing the temperature of the grill plates to drop below the threshold temperature.

**BRIEF DESCRIPTION OF THE DRAWINGS**

In the drawings:
FIG. 1 is a perspective view of a prior art waffle maker.
FIG. 2A is a partial view of the waffle maker from FIG. 1, with a mold according to a first embodiment of the invention.
FIG. 2B is a sectional view of the mold from FIG. 2A, taken along line 2A-2A.
FIG. 3 is a perspective view of a mold according to a second embodiment of the invention.
FIG. 4 is a perspective view of a mold according to a third embodiment of the invention.
FIG. 5A is a partial view of the waffle maker from FIG. 1, with a mold according to a fourth embodiment of the invention.
FIG. 5B is a sectional view of the mold from FIG. 5a taken along line 5B-5B.
FIG. 6 is a perspective view of a mold according to a fifth embodiment of the invention.
FIG. 7 is a perspective view of a mold according to a sixth embodiment of the invention.

**DESCRIPTION OF THE PREFERRED EMBODIMENT**

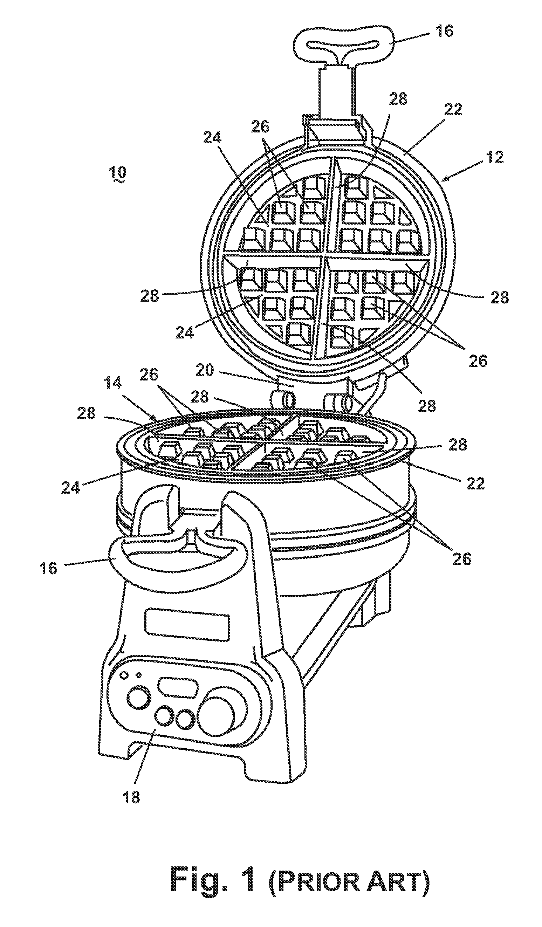

Referring to the drawings, and in particular to Fig. 1, an example of a grill is illustrated as a commercially available waffle maker 10. The waffle maker 10 has opposing upper and lower grill plates 12, 14 that are commonly made of a metal, such as iron or steel, that will conduct heat to a food item received between the grill plates 12, 14 when the waffle maker 10 is connected to a source of electricity. The metallic grill plates 12, 14 usually have a non-stick coating. The grill plates 12, 14 are shown having a circular shape, although square and rectangular grill plates are also common, and a variety of other shapes, although less prevalent, could also be used. The upper grill plates 12, 14 are each typically provided with a handle 16 that allows the waffle maker 10 to be manipulated safely when hot, although other designs wherein only a single handle is provided is also possible. The waffle maker 10 can be further provided with a user interface 18 having multiple controls and indicators to control and monitor the cooking of the waffle known to those skilled in the art, including setting the temperature of the grill plates at or above a minimum grilling temperature suitable for cooking the waffle, although in many embodiments the cooking temperature of the waffle maker 10 is fixed, and therefor this feature is accomplished by simply turning on the waffle maker 10.

The grill plates 12, 14 are movable between an opened position (shown) and a closed position (not shown), where the grill plate 12 overlies the grill plate 14 in a well known manner. The upper grill plate 12 can be pivotally connected to the lower grill plate 14 by a hinge 20 such that the upper grill plate 12 pivots from the opened position to the closed position where the upper grill plate 12 overlies the lower grill plate 14. Each grill plate 12, 14 may have a rim 22 defining the outer periphery of a recessed surface 24 from which multiple studs 26 project. The studs 26 may be arranged so that each stud 24 on the upper grill plate 12 is aligned with, but slightly spaced from, a stud 24 on the lower grill plate 14 in the closed position, although other configurations wherein the studs 24 on the upper grill plate 12 are not aligned with a stud 24 on the lower grill plate 14 may also be possible. In the embodiment shown, each grill plate 12, 14, further may have two ribs 28 that intersect perpendicularly to divide each grill plate into four quadrants, although other embodiments may omit one or both of the ribs 28 or have additional ribs 28. Furthermore, the ribs 28 may be arranged in configurations other than intersecting perpendicularly.

To cook a food item using the waffle maker 10, the users places a food item on the lower grill plate 14 and moves the upper grill plate 12 to the closed position such that both grill plates 12, 14 contact the food item to transfer heat from the grill plates 12, 14 to the food item. The grill plates 12, 14 can be preheated to a desired grilling temperature before placing a food item between the grill plates 12, 14.

The shape of a food item cooked by the waffle maker 10 takes on the shape of the grill plates 12, 14, including the studs 26 and the ribs 28, which affect the outline and surface texture of the food item. For example, a waffle cooked by the waffle iron 10 will have a circular outer periphery due to the circular shape of the grill plates 12, 14, and a waffle-like surface texture due to the studs 26. The ribs 28 divide the waffle into four quadrants and may allow the waffle to be easily and neatly broken into four sections.

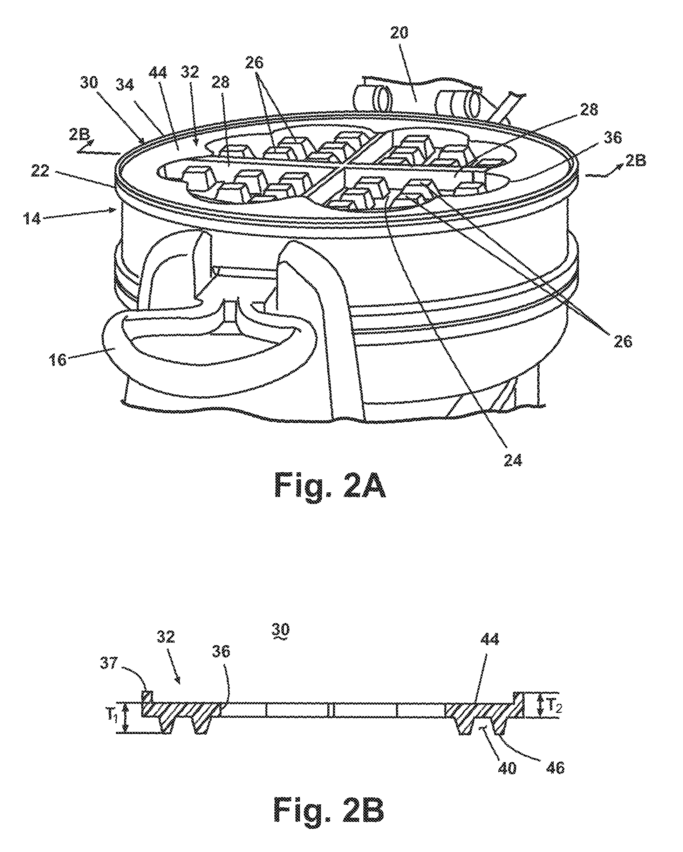

Referring to Fig. 2A, a mold 30 according to a first embodiment of the invention is illustrated and can be used with a grill, such as the waffle maker 10. The mold 30 may have a body 32 bounded by a peripheral edge 34. A form, defined by wall 36, may be provided in the body 32 and defines at least a portion of a recess in which the food item is received for cooking, and also defines the shape of the food item cooked with the mold. The recess can be a cavity in which to food item is placed and/or a surface on which the food item rests during cooking. The shape of the food item can, for example, be the outer periphery of the food item, the surface texture of the food item, or both. In the example of a waffle maker, the food item is typically a batter, which will assume the shape of its container. The batter may be poured onto the lower grill plate 14, within the boundary of the wall 36 and will assume an outer periphery shape defined by the wall 36 and a surface texture defined by the grill plates 12, 14, studs 26, and ribs 28. The mold 30 can be used in conjunction with a grill to cook many different food items. Exemplary food items include, but are not limited to, waffles, pancakes, waffle cones, pizzelles, bread, and meat. In embodiment shown in Fig. 2A, the form is a clover-shaped wall 36 that defines the outer boundary of the recess in which the food item is received for cooking, and also defines the outer periphery of the food item cooked with the mold 30. In the waffle maker example, the mold 30 can be used to cook clover-shaped waffles.

The mold 30 is received between the grill plates 12, 14 and selectively closes off a portion of the grill plates 12, 14 from direct contact with the food item. When the mold 30 is placed on the lower grill plate 14, the peripheral edge 34 rests on the rim 22 of the lower grill plate 14 or, in an embodiment of a grill plate 14 not having a rim 22, directly on the lower grill plate 14. The wall 36 defines the outer periphery of the food item, such that only a portion of the grill plates 12, 14 directly contacts a food item being cooked. The wall 36 is illustrated in the shape of a clover, for making a food item with a clover-shaped outer periphery, but any desired shape can be used. The surface texture of the food item being cooked is defined by the portion of the surface 24, the studs 26, and the portion of the ribs 28 on the grill plates 12, 14 within the boundary of the wall 36.

Fig. 2B shows a cross section of Fig. 2A wherein the body 32 has an upper surface 44 that can be generally planar to provide a surface on which a portion of the studs 26 of the upper grill plate 12 rest, and a lower surface 46 that can be formed with recesses 40 that complementarily receive the studs 26 on the lower grill plate 14. Alternately, the lower surface 46 can be generally planar such that the lower surface 46 rests on top of the studs 26 of the lower grill plate 14. The body 32 can be a membrane, where the thickness $T_1$ of the body 32 is relatively small such that the grill plates 12, 14 can be fully closed when receiving the mold 30. The thickness $T_1$ is defined between the upper surface 44 and the lower surface 46. The peripheral edge 34 is also relatively thin, with a thickness $T_2$. The thickness $T_2$ of the peripheral edge 34 can be less than, greater than, or generally equal to the thickness $T_1$ of the body 32.

In use, the user inserts and removes the mold 30 from the grill plates 12, 14. The body 32 can be made of a non-abrasive material that will not damage the grill plates 12, 14, especially any coating, such as a non-stick coating, on the grill plates 12, 14 when inserting or removing the mold 30. As used herein, the term "non-abrasive" is used to define a material that will not mar the grill plates 12, 14 or a coating on the grill plates 12, 14. One non-limiting example of a suitable non-abrasive material is silicone, which is sufficiently soft and also flexible to be inserted and removed without damaging the non-stick coating.

The body 32 may have properties, both intensive and extensive, that allow the user to remove the mold 30 by hand from the hot grill plates 12, 14 after cooking a food item without waiting for the grill plates 12, 14 to cool. In particular, the material selected for the body 32 may allow the user to remove the mold 30 by hand without a harmful effect on the skin of the user's hand, for example, with sustaining a burn of the epidermis. The formula for determining the amount of heat transferred is given below:

$$q = m(\Delta T)C_p$$

where:
q = amount of heat transferred;
m = mass;
$\Delta T$ = the change in temperature; and
$C_p$ = specific heat.

Given that $\Delta T$ is relatively constant in that it is the temperature difference between the users hand and the body 32, which is normally at the same temperature as the grill plates, the mass of the body **m** and the specific heat of the body $C_p$ are the two properties that can be manipulated to achieve the desired result. The specific heat $C_p$ is selected based on the material forming the body, the physical characteristics of the body, and the anticipated temperatures of the grill plates. The mold 30 can be designed to ensure that the mold 30 has a suitably low mass **m.** For example, in the embodiments shown the body 32 and peripheral edge 34 has a relatively small thickness, thus providing a mold 30 with minimal mass **m.** The peripheral edge 34 can be also located exteriorly of the grill plates 12, 14 and will not rise to the same temperature as the portion of the body 32 in direct contact with the grill plates.

The material selected for the body 32 may preferably also have properties such that the use of the mold 30 with the waffle maker 10 does not substantially reduce the temperature of the heated grill plates 12, 14. A "substantial reduction" in temperature of the heated grill plates 12, 14 is a reduction to below the minimum grilling temperature required for a particular food item. Thus, the selected material may not reduce the temperature of the heated grill plates 12, 14 below the minimum grilling temperature required for cooking a particular food item. This allows another food item to be cooked immediately after removing a cooked food item and mold 30 without having to reheat the grill plates 12, 14. One way this is done is by using a material for the body that will not absorb a lot of the heat from the grill plates 12, 14. In other words, a material with a low thermal conductivity would be suitable for the body 32.

The material may further possess appropriate heat resistant properties so that it will not deform when subjected to heat from the grill plates 12, 14. The selected material also preferably will not pass any odor or taste into the food item. Silicone is also suitably heat resistant and will not alter the smell or taste of the food item. Further, silicone can be easily shaped to make molds 30 having different forms and can be made to be translucent or colored to enhance the aesthetic appeal of the mold 30. A portion or the mold 30, for example, only the body 32, or the entire mold 30 can be made of silicone. Silicone is just one example of a suitable material.

Any other suitable material may also be used. Suitable materials may be heat resistant such that they do not melt during grilling. Suitable materials also preferably do not deleteriously impact the taste or odor of the food being cooked. Suitable materials may be non-stick, flexible, and non-abrasive.

In addition to the qualities and properties discussed above, the mold 30 can further be made of a material having further desirable qualities that make the mold 30 easy to clean and store when not in use. The selected material can be flexible to allow for easy storage and cleaning. The mold 30 can further be capable of being washed in an automatic dishwasher without damaging the mold 30.

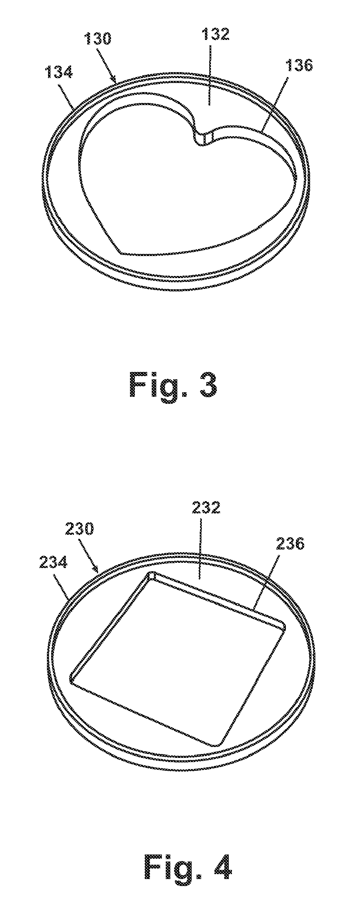

Referring to FIG. 3, a second embodiment of the mold 130 is illustrated, where like elements are defined with the same reference numerals increased by 100. The form is a heart-shaped wall 136 that defines the outer boundary of the recess in which the food item is received for cooking, and may also defines the outer periphery of the food item cooked with the mold 130 such as when the food item to be cooked is in a liquid or a semi-liquid state. In the waffle maker example, the mold 130 can be used to cook heart-shaped waffles.

Referring to FIG. 4, a third embodiment of the mold 230 is illustrated, where like elements are defined with the same reference numerals increased by 200. The form is a square wall 236 that defines the outer boundary of the recess in which the food item is received for cooking, and also defines the outer periphery of the food item cooked with the mold 230. In the waffle maker example, the mold 230 can be used to cook square-shaped waffles.

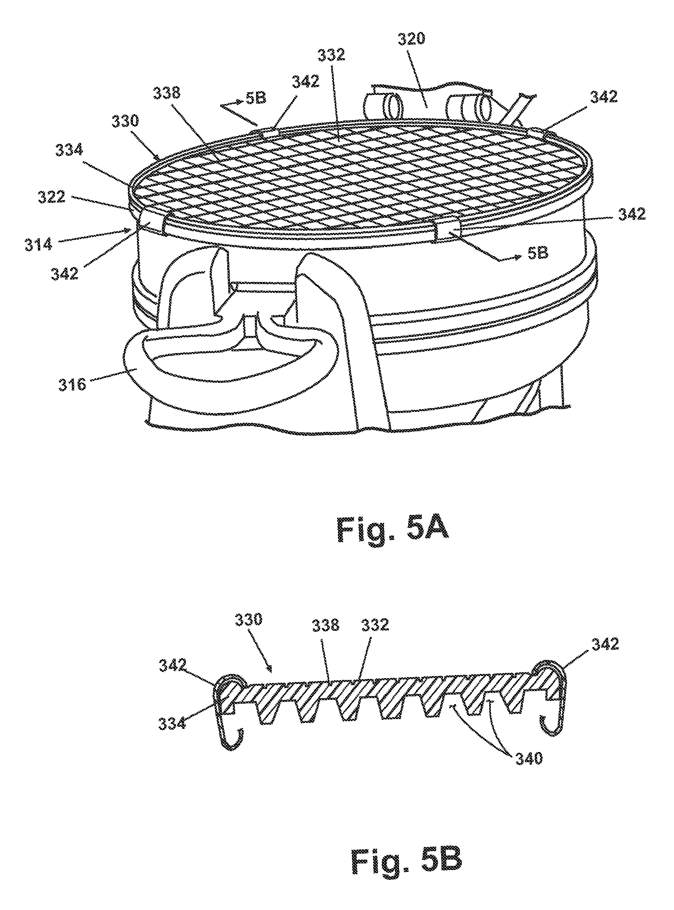

Referring to FIG. 5a, a fourth embodiment of the mold 330 is illustrated, where like elements are defined with the same reference numerals increased by 300. The mold 330 closes off the entire lower grill plate 14 from direct contact with the food item. In this case, the upper grill plate 12 can be moved to the closed position to cook the food item, or left in the opened position, such that the food item is cooked by heat from the lower grill plate 14 alone. A form in the manner of a pattern 338 may be provided on the top surface of the body 332 to impart a surface texture to the food item cooked on the mold 330, although the top surface of the body 332 could alternatively be smooth/flat. For example, the form can be a cross-hatch pattern 338, such as would be useful for making pizzelles or waffle cones for ice cream.

Referring additionally to FIG. 5b, the bottom surface of the body 332 can be formed with recesses 340 that complementarily receive the studs 26 on the grill plate 14. The close contact between the body 332 and the grill plate 14 potentially improves the transfer of heat between the grill plate 14 and the body 332. This may be important when the food item is cooked without the upper grill plate 12 in the closed position; however, any embodiment of the molds shown herein can be formed with the recesses 340.

The peripheral edge 334 of the mold 330 can be provided with at least one clip 342 that engage the rim 22 to secure the mold 330 to the waffle maker 10 and retain the mold 330 in proper orientation with respect to the lower grill plate 14. The clip 342 may be preferably non-damaging to the mold 330 or waffle maker 10, may be suitably heat resistant, and may be secured to the rim 22 without the use of tools. Alternately, a friction fit or gravity can be used to keep the mold 330 in place. In some embodiments of the invention, the clips 342 may further be used to attach the mold 330 to the upper grill plate 12 (Fig. 1), where a friction fit or gravity can not be used a means to secure and retain the mold 330. This can allow two molds 330 to be used to cook a food item at the same time.

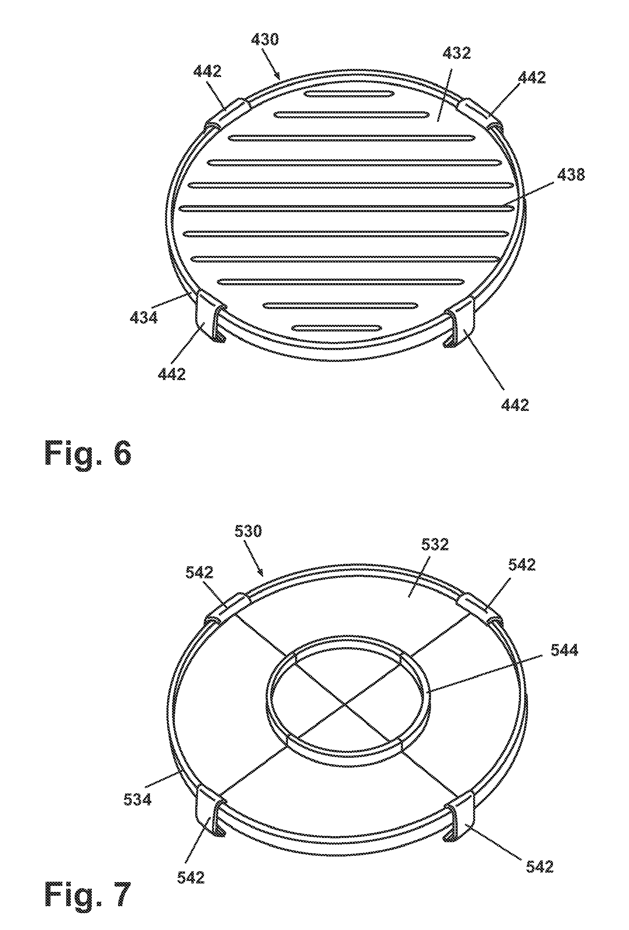

Referring to FIG. 6, a fifth embodiment of the mold 430 is illustrated, where like elements are defined with the same reference numerals increased by 400. The form on the top surface of the body 432 is a grill-marked pattern 438, for making a food item with a grill-marked surface texture, such as would be useful for making flat bread, grilling sandwiches, and/or grilling meat.

Referring to FIG. 7, a sixth embodiment of the mold 530 is illustrated, where like elements are defined with the same reference numerals increased by 500. The form provided on the body 532 can define both the outer periphery and the surface texture of the food item. The top surface of the body 532 is relatively smooth to impart a smooth surface texture to the food item and a circular wall 536 is provided on the top surface of the body 532 to define the outer periphery of the food item placed within the boundary of the wall 536. The food item can also be placed on the body 532 outside the boundary of the wall 536. In this case, the peripheral edge 534 can define the outer periphery of the food item and the wall 536 can define a central hole in the food item. Exemplary food items that can be cooked using the mold 530 in conjunction with a grill include, but are not limited to pancakes, eggs, bacon, and other food items typically cooked on a traditional griddle.

The invention is not limited to molds 30 having the forms shown herein; the mold 30 can have forms defining other outer peripheries and surface textures of food items than those illustrated in FIGS. 2-7. Similarly, the mold 30 can define an inner periphery around which the food item is placed. Some exemplary outer and/or inner peripheries are: circular, rectangular, star-shaped, pentagonal, hexagonal, octagonal, animal shapes, letters of the alphabet, and holiday-themed shapes. Some exemplary surface textures are: dotted, checked, and outlines of animals or holiday themes. The molds 30 can further be configured to have multiple forms, including multiple walls 36 and patterns 38 to cook multiple food items simultaneously having the same or different shapes.

By interchanging molds 30 with different forms, the user can cook food items having different shapes without having to reheat the grill plates 12, 14. By appropriate selection of materials of the body 32, the properties of the body 32 may allow the user to grab the mold 30 by hand after cooking a food item on the grill plates 12, 14 without substantiating a burn. By making the mold 30 of silicone, the mold 30 will typically not damage the grill plates 12, 14. Silicone may also have a suitable specific heat and thermal conductivity, in addition to being easily shaped and colored.

While the invention has been specifically described in connection with certain specific embodiments thereof, it is to be understood that this is by way of illustration and not of limitation, and the scope of the appended claims should be construed as broadly as the prior art will permit.

**Claims**

1. A mold for use with a grill having opposing grill plates movable between opened and closed positions between which a food item is received for cooking when the grill plates are in the closed position, the mold comprising:

   a flexible body configured to be received between the grill plates in the closed position and defining at least a portion of a recess in which the food item is received for cooking, with the recess defining the shape of the food item; and a portion of the body having properties such that a user can remove the mold by hand from the grill plates after the body is heated by the grill plates without deleterious impact on the epidermis of the user's hand.

2. The mold according to claim 1 wherein the body comprises silicone.

3. The mold according to claim 1 wherein the body comprises a membrane.

4. The mold according to claim 1 wherein the body includes a lower surface that is complementary with a grill plate.

5. The mold according to claim 1 wherein the recess comprises at least one of an outer periphery and a surface texture of the food item to define the shape.

6. The mold according to claim 5 wherein the outer periphery comprises one of a heart, a clover, a square, and a circle.

7. The mold according to claim 5 wherein the surface texture comprises one of cross-hatched, smooth, and grill-marked.

8. The mold according to claim 1 wherein the body comprises a non-abrasive material.

9. The mold according to claim 1 wherein the body comprises a peripheral rim forming the portion of the body.

10. The mold according to claim 1 wherein the body includes properties such that the insertion of the body between grill plates that are heated to a grilling temperature suitable for grilling a food item does not substantially reduce the temperature of the grill plates.

# Fig. 1 (PRIOR ART)

**Fig. 2A**

**Fig. 2B**

**Fig. 3**

**Fig. 4**

Fig. 5A

Fig. 5B

**Fig. 6**

**Fig. 7**

**European Patent Office**

**EUROPEAN SEARCH REPORT**

Application Number

EP 07 11 8129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | US 2006/272511 A1 (DREIMANN SAMANTHA [US] ET AL) 7 December 2006 (2006-12-07) * the whole document * ----- | 1-10 | INV. A47J37/06 |
| P,X | US 2007/029316 A1 (FERNANDEZ JUAN [US]) 8 February 2007 (2007-02-08) * the whole document * ----- | 1-6 | |
| A | GB 809 858 A (SUNBEAM CORP) 4 March 1959 (1959-03-04) * the whole document * ----- | 1-10 | |

TECHNICAL FIELDS SEARCHED (IPC)

A47J

The present search report has been drawn up for all claims

| Place of search | Date of completion of the search | Examiner |
|---|---|---|
| Munich | 11 December 2007 | Fritsch, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 8129

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2007

| Patent document cited in search report | | Publication date | Patent family member(s) | Publication date |
|---|---|---|---|---|
| US 2006272511 | A1 | 07-12-2006 | NONE | |
| US 2007029316 | A1 | 08-02-2007 | NONE | |
| GB 809858 | A | 04-03-1959 | NONE | |

EPO FORM P0459

For more details about this annex : see Official Journal of the European Patent Office, No. 12/82